# EUROPÄISCHE PATENTANMELDUNG

(11) **EP 1 857 404 A2**
(43) Veröffentlichungstag der Anmeldung: **21.11.2007**
(21) Anmeldenummer: 07009452.9
(22) Anmeldetag: 10.05.2007
(51) Int. Cl.: B66F 9/20

(54) **Flurförderzeug**

(30) Priorität: 11.05.2006 DE 102006022113
(71) Anmelder: Jungheinrich Aktiengesellschaft, 22047 Hamburg (DE)
(72) Erfinder: Schröder, Klaus, 92339 Beilngries (DE)
(74) Vertreter: Tiesmeyer, Johannes

(57) **Zusammenfassung**

Flurförderzeug mit einer Bedienkonsole (14) und einer verstellbaren Halterung (20) für die Bedienkonsole (14), wobei die Halterung (20) mittels einer Gelenkanordnung (22) an einem Rahmenteil (24) des Flurförderzeugs um eine Neigungsverstellachse (26) schwenkbar angebracht ist, so dass sie wahlweise in unterschiedliche Schwenkstellungen einstellbar ist, um die Bedienkonsole (14) in verschiedenen Neigungseinstellungen zu positionieren, wobei ferner wenigstens eine blockierbare Gasfeder (32) zwischen einem Rahmenteil (24) des Flurförderzeugs und der Halterung (20) als Arretierelement zum Feststellen der Halterung (20) in einer jeweiligen Schwenkstellung vorgesehen ist und diese blockierbare Gasfeder (32) mit einer zum Verstellen der Halterung (20) betätigbaren Auslösevorrichtung (42) zum Freigeben der Gasfeder (32) aus ihrem Blockierzustand und zum Einrückenlassen der Gasfeder (32) in ihren Blockierzustand versehen ist.

## Beschreibung

Die Erfindung betrifft ein Flurförderzeug mit einer Bedienkonsole und einer verstellbaren Halterung für die Bedienkonsole.

Flurförderzeuge der vorstehend genannten Art sind in vielfältigen Bauformen im Einsatz, so z. B. als Hochregal-Kommissionierstapler. Solche Hochregal-Kommissionierstapler können z. B. als Elektro-Kommissionier-/Dreiseitenstapler ausgebildet sein, die an der fahrbaren Basis ein teleskopierbares Hubgerüst und daran höhenverstellbar den Fahrerstand aufweisen. An dem Fahrerstand ist als Lasthandhabungsvorrichtung ein Seitenschubgerät mit einem Zusatzhubmast und einem daran höhenverstellbaren und eine Lasttraggabel aufweisenden Gabelträger vorgesehen. Im Fahrerstand eines solchen Hochregalstaplers ist als Bedienungseinrichtung üblicherweise ein Bedienpult mit einer Bedienkonsole vorgesehen, welche z. B. ein Lenkrad, Steuerschaltungen für diverse Betriebsfunktionen des Hochregalstaplers und wenigstens ein Display aufweist. Allgemein bezieht sich die Erfindung auf Flurförderzeuge mit einer Bedienkonsole, die je nach ergonomischem Bedarf für die Bedienungsperson verstellbar ist. Eine ergonomische Anpassbarkeit der Bedienkonsolenausrichtung ist insbesondere bei Flurförderzeugen wichtig, welche von einer Bedienungsperson wahlweise in stehender Haltung oder in sitzender Haltung im Fahrerstand gesteuert werden können.

Es sind auch bereits Flurförderzeuge mit einer verstellbaren Bedienkonsole im Einsatz, deren verstellbare Halterung eine Gasfeder aufweist. Diese Gasfeder dient dazu, beim Verstellen eine Unterstützungskraft auf die Bedienkonsole auszuüben. Ist eine gewünschte Einstellung gefunden worden, so ist die verstellbare Halterung in dieser Bedienkonsoleneinstellung zu fixieren, wozu eine Klemmschraubenanordnung verwendet wird.

Der Erfindung liegt die Aufgabe zugrunde, ein Flurförderzeug der eingangs genannten Art bereitzustellen, bei dem die Bedienkonsole in komfortabler Weise rasch und zuverlässig in eine jeweilige gewünschte neue Position einstellbar ist.

Zur Lösung dieser Aufgabe wird erfindungsgemäß vorgeschlagen, dass wenigstens eine blockierbare Gasfeder als stufenlos verstellbares Arretierelement zur Festlegung der jeweils gewählten Stellung der Halterung vorgesehen ist und diese blockierbare Gasfeder mit einer zum Verstellen der Halterung betätigbaren Auslösevorrichtung zum Freigeben der Gasfeder aus ihrem Blockierzustand und zum Einrückenlassen der Gasfeder in ihren Blockierzustand versehen ist.

Vorzugsweise ist die Halterung mittels einer Gelenkanordnung an einem Rahmenteil des Flurförderzeugs um eine Neigungsverstellachse schwenkbar angebracht, so dass sie wahlweise in unterschiedliche Schwenkstellungen einstellbar ist, um die Bedienkonsole in verschiedenen Neigungseinstellungen zu positionieren, wobei die blockierbare Gasfeder zwischen einem Rahmenteil des Flurförderzeugs und der Halterung als Arretierelement zum Feststellen der Halterung in einer jeweiligen Schwenkstellung vorgesehen ist.

Unter dem Begriff Gasfeder sollen im Rahmen der vorliegenden Erfindung vornehmlich Gasfedern mit teilweiser Ölfüllung und Gasfedern ohne Ölfüllung fallen, deren im Gasfederzylinder verschiebbar geführter Hauptkolben in einer jeweiligen Einstellung blockierbar ist, so dass auch die dem Hauptkolben zugehörige Kolbenstange der Gasfeder in ihrer jeweiligen Ausschubstellung blockiert ist. Das Blockieren des Kolbens erfolgt durch Verschließen eines Fluidaustauschpfades zwischen den vom Kolben getrennten Kammerbereichen des Gasfederzylinders. Hierzu dient ein Ventil in dem Fluidaustauschpfad. Das Ventil kann wahlweise geöffnet werden, um den Fluidaustausch zwischen den Kammerbereichen zu ermöglichen. In diesem Fall ist der Kolben dann zur Bewegung im Gasfederzylinder freigegeben, so dass seine Kolbenstange weiter ausgefahren bzw. weiter eingezogen werden kann. Im Rahmen der vorliegenden Erfindung wird somit die blockierbare Gasfeder als stufenlos verstellbares Arretierelement für die verstellbare Bedienkonsole ausgenutzt. Die Auslösevorrichtung dient zur Betätigung des Ventils im Fluidaustauschpfad, um die Gasfeder aus ihrem Blockierzustand freizugeben oder sie in ihrem Blockierzustand einrücken zu lassen.

Als blockierbares stufenlos verstellbares Arretierelement kommt im Rahmen der Erfindung ggf. auch ein Dämpfungszylinder mit Flüssigkeitsfüllung, insbesondere Ölfüllung anstelle der Gasfeder in Frage. Der grundsätzliche Aufbau eines solchen hydraulischen Dämpfungszylinders ähnelt dem Aufbau einer blockierbaren Gasfeder, wobei jedoch in dem Zylinderraum kein unter Druck stehendes Betriebsgas, sondern als fluides Medium nur Flüssigkeit, vorzugsweise Öl enthalten ist. Das Blockieren erfolgt ebenfalls durch Verschließen eines Fluidaustauschpfades zwischen den vom Hauptkolben getrennten Kammerbereichen des Zylinders.

Gemäß einer Weiterbildung der vorliegenden Erfindung weist die Auslösevorrichtung einen elektromagnetischen Auslösekrafterzeuger oder einen hydraulischen Auslösekrafterzeuger oder einen pneumatischen Auslösekrafterzeuger auf. Der Auslösekrafterzeuger kann durch ein von der Bedienungsperson zu betätigenden Schalter aktiviert werden, um die Gasfeder aus ihrem Blockierzustand freizugeben. Dieser Schalter sollte vorzugsweise an der Bedienkonsole vorgesehen sein, so dass die Schalterbetätigung und das Verstellen der Bedienkonsole auf einfache Weise simultan erfolgen kann. Die Bedienungsperson kann dann die Bedienkonsole in die gewünschte Position einstellen und durch Schalten des Auslösekrafterzeugers die Gasfeder in der betreffenden Stellung blockieren.

Vorzugsweise ist die Halterung der Bedienkonsole längenverstellbar, wobei sie hierzu ein mit der Gelenkanordnung verbundenes Basisteil und ein relativ dazu teleskopisch verstellbares Konsolenstützteil aufweist.

Gemäß einer Ausführungsform der Erfindung ist die blockierbare Gasfeder als Arretierelement zur Festlegung der jeweiligen Längeneinstellung der Halterung eingerichtet.

Vorzugsweise ist die blockierbare Gasfeder halterungsseitig an dem Konsolenstützteil angelenkt, so dass sie als Arretierelement sowohl für die jeweils gewählte Schwenkstellung als auch für die jeweils gewählte Längeneinstellung der Halterung dient.

Gemäß einer anderen Ausführungsform der Erfindung mit teleskopierbarer Bedienkonsolenhalterung ist die blockierbare Gasfeder halterungsseitig an dem Basisteil angelenkt. Sie dient in diesem Fall als Arretierelement für die jeweils gewählte Schwenkstellung der Halterung. Diese Lösung bietet sich an, wenn die Bedienungsperson in den meisten Fällen der Bedienkonsolenverstellung mit der Neigungsverstellung auskommt. Zum Arretieren der Halterung in einer jeweiligen Längeneinstellung kann eine gesonderte Einrichtung vorgesehen sein, z. B. ein Klemmschraubenfeststellmechanismus oder ggf. eine gesonderte blockierbare Gasfeder mit zugehöriger Auslösevorrichtung.

Ausführungsbeispiele der Erfindung werden anhand der beiliegenden Figuren näher erläutert.
- Fig. 1: zeigt in einer perspektivischen Darstellung ein Flurförderzeug nach der Erfindung.
- Fig. 2A und 2B: zeigen die verstellbare Bedienkonsole des Flurförderzeugs aus Fig. 1 in zwei verschiedenen Einstellungen, wobei eine Seitenansicht mit Längsschnittdarstellung der Konsolenhalterung gewählt wurde.
- Fig. 3: zeigt eine Abwandlung der verstellbaren Bedienkonsole aus Fig. 2A bzw. Fig. 2B in Seitenansicht und Längsschnittdarstellung der verstellbaren Halterung.
- Fig. 4: zeigt in einer vereinfachten und schematisierten Weise eine für die Erfindung benutzbare Gasdruckfeder mit elektromagnetischer Auslösevorrichtung.

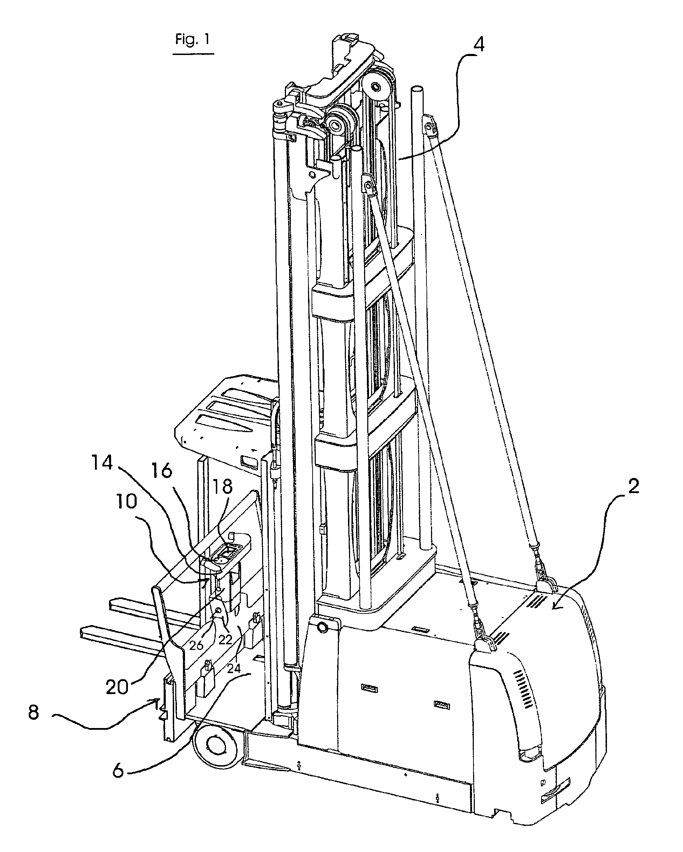

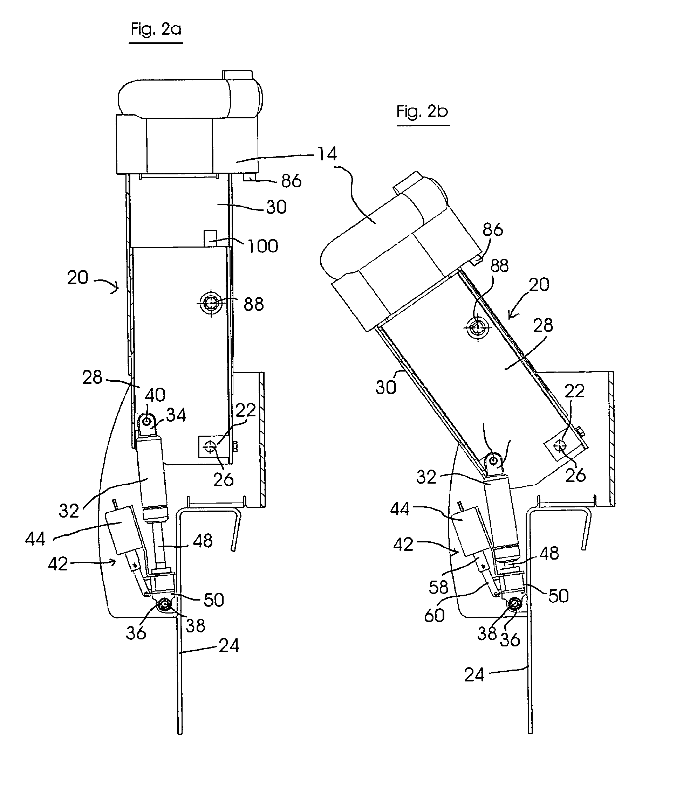

Bei dem Flurförderzeug gemäß Fig. 1 handelt es sich um einen Elektro-Kommissionier-/Dreiseitenstapler mit einem Basisfahrzeug 2, einem teleskopierbaren Hubgerüst 4 auf dem Basisfahrzeug 2, einem am Hubgerüst 4 vertikal verfahrbaren Fahrerstand 6, der an seiner Vorderseite als Lasthandhabungsvorrichtung ein Seitenschubgerät 8 an sich bekannter Bauart aufweist. Eine in dem Fahrerstand 6 befindliche Bedienungsperson (nicht gezeigt) kann mittels der Bedienungseinrichtung 10 Steueranweisungen an eine (nicht gezeigte) Steuereinrichtung abgeben, um den Fahrbetrieb, den Hubbetrieb und den weiteren Lasthandhabungsbetrieb des Flurförderzeugs zu steuern. Die Bedienungseinrichtung 10 umfasst eine Bedienkonsole 14 mit einem Lenkrad 16, einem Display 18 und mit mehreren Steuerschaltern bzw. Steuertasten. Die Bedienkonsole 14 ist an einer Halterung 20 abnehmbar befestigt, welche eine Verstellung der Bedienkonsole 14 zwischen der in Fig. 1 gezeigten Position für die Bedienung im Stehen und in einer in Richtung zum Hubgerüst 4 verschwenkten und abgesenkten Position für die Bedienung im Sitzen ermöglicht. Die Halterung 20 ist mittels der Gelenkanordnung 22 an einer vorderen Brüstung 24 des Fahrerstandes 6 so angeordnet, dass sie um die horizontale Neigungsverstellachse 26 verschwenkbar ist. Die Halterung 20 ist eine teleskopisch längenverstellbare Säule mit einem unteren Basisteil 28 (vgl. Fig. 2a und 2b), das mit der Gelenkanordnung 22 verbunden ist, und einem relativ zu dem unteren Basisteil teleskopisch verstellbaren Konsolenstützteil 30.

Fig. 2a zeigt die verstellbare Bedienkonsole 14 in der auch in Fig. 1 dargestellten Einstellposition für die Bedienung im Stehen.

In Fig. 2b ist die Halterung 20 um die Neigungsverstellachse 26 verkippt in einer Position für die Bedienung im Sitzen dargestellt, wobei das Konsolenstützteil 30 der Halterung 20 teleskopisch eingeschoben ist.

Eine Gasfeder 32 erstreckt sich zwischen dem Brüstungsblech 24 am Fahrzeugrahmen und dem Basisteil 28 der Halterung 20. Im Beispielsfall ist die Gasfeder 32 mit ihrem zylinderendseitigen Auge 34 am Basisteil 28 - und mit ihrem kolbenstangenendseitigen Auge 36 an dem Brüstungsblech 24 angelenkt. Die Gelenkachsen 38, 40 verlaufen parallel zur Neigungsverstellachse 26 der Halterung 20.

Die blockierbare Gasfeder 32 ist mit einer elektromagnetischen Auslösevorrichtung 42 ausgestattet.

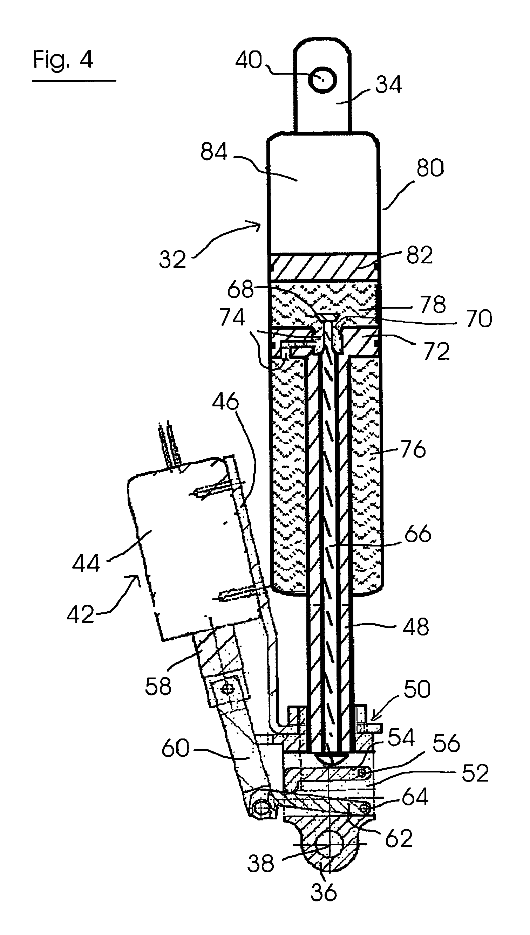

Diese Auslösevorrichtung 42 umfasst einen schaltbaren Elektromagneten 44 (vgl. Fig. 4), der durch das Tragblech 46 an der am unteren Ende der Kolbenstange 48 vorgesehenen Augenhalterung 50 befestigt ist. In einer Kammer 52 der Augenhalterung 50 ist ein Auslösehebel 54 der Auslösevorrichtung 42 vorgesehen, wobei der Auslösehebel 54 zwischen der in Fig. 4 gezeigten angehobenen Auslösestellung und einer demgegenüber abgesenkten Passivstellung um die Schwenkachse 56 schwenkbar ist. Zur Betätigung des Auslösehebels 54 ist ein mit dem Anker 58 des Elektromagneten 44 verbundenes Betätigungsgestänge 60 vorgesehen, welches einen Kipphebel 62 aufweist, an dessen Oberseite der Auslösehebel 54 abgestützt ist. Fig. 4 zeigt die Auslösevorrichtung 42 in dem Zustand, in dem der Anker 58 durch Bestromen des Elektromagneten 44 angezogen ist, so dass der Kipphebel 62 des Betätigungsgestänges 60 um die Kippachse 64 nach oben verkippt und somit so angezogen ist, dass er den Auslösehebel 54 aktiviert hat.

Die Kolbenstange 48 der Gasfeder 32 weist in einer Axialführung eine verschiebbare Auslösestange 66 auf, die an ihrem oberen Ende ein Ventilelement 68 trägt. Das Ventilelement 68 bildet mit einem Ventilsitz 70 an dem zur Kolbenstange 48 gehörenden Kolben 72 ein Ventil zum wahlweisen Öffnen bzw. Verschließen eines Fluidaustauschpfades 74 zwischen den vom Kolben 72 separierten Kammerbereichen 76 und 78 des Gasfederzylinders 80.

Zum Blockieren der Gasfeder ist das Ventil 68, 70 aus dem in Fig. 4 gezeigten Öffnungszustand in den Schließzustand zu überführen, so dass kein Fluidaustausch zwischen den Kammerbereichen 76, 78 des Gasfederzylinders 80 mehr möglich ist. Damit wird dann eine weitere Kolbenbewegung des Kolbens 72 blockiert, so dass ein weiteres Ausfahren bzw. Einziehen der Kolbenstange 48 nicht mehr möglich ist. Die Gasfeder 80 arretiert somit die Bedienkonsolenhalterung 20 in der betreffenden Neigungseinstellung. In Fig. 4 ist die Auslösestange 66 von dem Auslösehebel 54 nach oben gedrückt dargestellt, so dass der Ventilkörper 68 von seinem Sitz 70 abgehoben ist. Es kann Fluidaustausch zwischen den Zylinderkammerbereichen 76 und 78 der Gasfeder durch den Fluidaustauschpfad 74 in dem Kolben 72 stattfinden, so dass die Blockade der Gasfeder 32 aufgehoben ist und eine Änderung der Neigungseinstellung der Bedienkonsolenhalterung 20 vorgenommen werden kann. Der Ventilkörper 68 bzw. dessen Auslösestange 66 sind normalerweise in Richtung zum Schließzustand des Ventils nach unten hin vorgespannt (nicht gezeigt), so dass nach Abschalten des Elektromagneten 44 automatisch wieder der Blockierzustand der Gasfeder 32 eintritt.

In dem Beispielsfall der Fig. 4 ist eine Gasfeder mit Ölfüllung unterhalb des Trennkolbens 82 und Gasfüllung in der Kammer 84 oberhalb des Trennkolbens 82 dargestellt. An dem Fluidaustausch zwischen den Kammerbereichen 76 und 78 des Gasfederzylinders nimmt somit nur das Öl teil.

Alternativ zu der in Fig. 4 gezeigten Gasfeder kommen auch andere Gasfedervarianten für die vorliegende Erfindung in Betracht, insbesondere auch solche, die nur eine Gasfüllung haben und keinen Trennkolben benötigen.

Die Gasfeder wird erfindungsgemäß als stufenlos verstellbares Arretierelement genutzt. Weiterhin kann auch ihre einseitig wirkende Kolbenstangenausschubkraft als Unterstützungskraft beim Verstellen der Bedienkonsole 14 genutzt werden.

Wie schon angesprochen, ist die Gasfeder normalerweise in ihrem blockierten Zustand (Ventil 68, 70) geschlossen und kann durch Betätigen des Elektromagneten 44 freigegeben werden. Zum Aktivieren des Elektromagneten 44 ist an der Bedienkonsole 14 ein Aktivierungsschalter 86 vorgesehen, den die Bedienungsperson mit einer Hand betätigen kann, um dann die Halterung 20 in eine andere Neigungseinstellung zu überführen.

Zur teleskopischen Verstellung der Länge der Halterung 20 ist im Beispielsfalle in Fig. 2a und Fig. 2b eine Klemmschraube 88 zu lösen, welche durch eine Bohrung in dem Basisteil 28 und durch ein Langloch 100 in dem Konsolenstützteil 30 hindurchgeführt ist. Das Langloch 100 bietet das Verschiebespiel für die Längenverstellung. Nach erfolgter Längeneinstellung wird die Klemmschraube wieder angezogen, um das Konsolenstützteil 30 an dem Basisteil 28 zu arretieren.

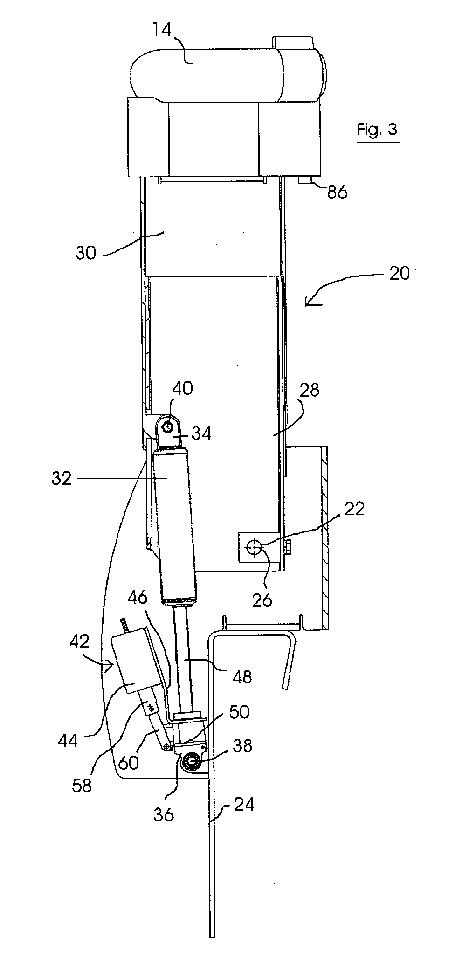

In Fig. 3 ist eine Variante des vorstehend erläuterten Ausführungsbeispiels gezeigt. Bei dem Ausführungsbeispiel gemäß Fig. 3 ist die ebenfalls mit dem Bezugszeichen 32 versehene Gasfeder mit ihrem zylinderendseitigen Befestigungsauge 34 an dem Konsolenstützteil 30 befestigt, welches teleskopisch verschiebbar an dem Basisteil 28 geführt ist. Die Gasfeder 32 in Fig. 3 dient somit als Arretierelement sowohl für die jeweilige Neigungseinstellung der Halterung 20 als auch in Bezug auf die Längeneinstellung der Halterung 20. Zum Verändern der Einstellung der Bedienkonsole 14 hat die Bedienungsperson durch Betätigen des Auslöseschalters 86 die Gasfeder aus ihrer Blockade freizugeben und dann durch Verschwenken und ggf. dem überlagertes Einstellen der Länge der Halterung 20 die Bedienkonsole 14 in die gewünschte Position zu bringen. Sobald die Betätigung des Schalters 86 dann wieder beendet wird, arretiert die Gasfeder 32 die Halterung 20 in der neuen Einstellung.

Die gezeigten Ausführungsbeispiele der verstellbaren Bedienkonsolen mit ihren Halterungen und Arretiermechanismen weisen einen einfachen Aufbau auf und sind sehr komfortabel zu handhaben.

## Patentansprüche

1. Flurförderzeug mit einer Bedienkonsole (14) und einer zur Positionierung der Bedienkonsole (14) in verschiedene Stellungen verstellbaren Halterung (20) für die Bedienkonsole (14), wobei wenigstens eine blockierbare Gasfeder (32) als stufenlos verstellbares Arretierelement zur Festlegung der jeweils gewählten Stellung der Halterung (20) vorgesehen ist und diese blockierbare Gasfeder (32) mit einer zum Verstellen der Halterung (20) betätigbaren Auslösevorrichtung (42) zum Freigeben der Gasfeder (32) aus ihrem Blockierzustand und zum Einrückenlassen der Gasfeder (32) in ihren Blockierzustand versehen ist.

2. Flurförderzeug nach Anspruch 1, wobei die Halterung (20) mittels einer Gelenkanordnung (22) an einem Rahmenteil (24) des Flurförderzeugs um eine Neigungsverstellachse (26) schwenkbar angebracht ist, so dass sie wahlweise in unterschiedliche Schwenkstellungen einstellbar ist, um die Bedienkonsole (14) in verschiedenen Neigungseinstellungen zu positionieren, wobei die blockierbare Gasfeder (32) zwischen einem Rahmenteil (24) des Flurförderzeugs und der Halterung (20) als Arretierelement zum Feststellen der Halterung (20) in einer jeweiligen Schwenkstellung vorgesehen ist.

3. Flurförderzeug nach Anspruch 1 oder 2, wobei die Auslösevorrichtung (42) einen elektromagnetischen Auslösekrafterzeuger (44) oder einen hydraulischen Auslösekrafterzeuger oder einen pneumatischen Auslösekrafterzeuger aufweist.

4. Flurförderzeug nach Anspruch 1,2 oder 3, wobei die Halterung (20) längenverstellbar ist und hierzu ein mit der Gelenkanordnung (22) verbundenes Basisteil (28) und ein relativ dazu teleskopisch verstellbares Konsolenstützteil (30) aufweist.

5. Flurförderzeug nach Anspruch 4, wobei die blockierbare Gasfeder (32) als Arretierelement zur Festlegung der jeweiligen Längeneinstellung der Halterung (20) eingerichtet ist.

6. Flurförderzeug nach Anspruch 4 und Anspruch 5, wobei die blockierbare Gasfeder (32) halterungsseitig an dem Konsolenstützteil (30) angelenkt ist und als Arretierelement sowohl für die jeweils gewählte Schwenkstellung als auch für die jeweils gewählte Längeneinstellung der Halterung dient.

7. Flurförderzeug nach Anspruch 4, wobei die blockierbare Gasfeder (32) halterungsseitig an dem Basisteil (28) angelenkt ist.

8. Flurförderzeug nach Anspruch 4 und Anspruch 7, wobei die Halterung (20) eine von der Gasfeder (32) gesonderte Einrichtung zum Arretieren der Halterung in einer jeweiligen Längeneinstellung aufweist.

9. Flurförderzeug nach Anspruch 8, wobei die Einrichtung zum Arretieren der Halterung (20) in einer jeweiligen Längeneinstellung einen Klemmschraubenfeststellmechanismus (88, 100) oder eine gesonderte blockierbare Gasfeder umfasst.
